## Europäisches Patentamt

## European Patent Office

## Office européen des brevets

(19)

(11) Veröffentlichungsnummer: **0 093 688**
**B1**

(12) # EUROPÄISCHE PATENTSCHRIFT

(45) Veröffentlichungstag der Patentschrift:
16.03.88

(51) Int. Cl.⁴: **B 60 C 27/08**

(21) Anmeldenummer: 83730044.1

(22) Anmeldetag: 29.04.83

(54) Reifenkette.

(30) Priorität: 30.04.82 DE 3216715
30.04.82 DE 3216714

(43) Veröffentlichungstag der Anmeldung:
09.11.83 Patentblatt 83/45

(45) Bekanntmachung des Hinweises auf die Patenterteilung:
16.03.88 Patentblatt 88/11

(84) Benannte Vertragsstaaten:
DE FR GB IT SE

(56) Entgegenhaltungen:
DE-A-2 924 511
FR-A-2 139 049
US-A-2 308 093
US-A-2 583 624

(73) Patentinhaber: RUD- Kettenfabrik Rieger & Dietz
GmbH u. Co., Friedensinsel, D-7080 Aalen 1 (DE)

(72) Erfinder: Holzwarth, Dietmar, Vogelhofstrasse 51,
D-7070 Schwäbisch Gmünd (DE)
Erfinder: Eberhardt, Franz, Gartenstrasse 48/1,
D-7080 Aalen (DE)

(74) Vertreter: Böning, Manfred, Dr. Ing.,
Patentanwälte Dipl.- Ing. Dieter Jander Dr. Ing.
Manfred Böning Kurfürstendamm 66, D-1000
Berlin 15 (DE)

## Beschreibung

Die Erfindung betrifft eine Reifenkette, insbesondere Gleitschutzkette mit aus ovalen Horizontalgliedern und Vertikalgliedern bestehenden Kettenstrangabschnitten, bei der die geraden Schenkel mindestens eines Teils der Horizontalglieder der Kettenstrangabschnitte zwischen den Gliedrundungen jeweils zweier in sie eingehängten Vertikalglieder von jeweils einem ovalen Vertikalglied umfaßt werden.

Bekannt ist eine Reifenkette der vorstehenden Art, bei der die jeweils beide Schenkel von Horizontalgliedern umfassenden Vertikalglieder Stützglieder formen (DE-PS-16 80 478). Die Stüzglieder haben in diesem Fall jeweils einen durchgehenden und jeweils einen offenen, d.h. eine unverschweißte Stoßstelle aufweisenden Schenkel. Das Anbringen der Stützglieder ist bei der bekannten Konstruktion vergleichsweise aufwendig, da die Stützglieder unter Einsatz entsprechender Vorrichtungen und Werkzeuge um die Horizontalglieder herumgebogen werden müssen, wenn man nicht auf die Anwendung von nach üblichen Verfahren hergestellten Kettenstrangabschnitten für das Laufnetz verzichten will. Die offene Bauweise der bekannten Stützglieder fördert außerdem Brüche infolge Dauerbelastung.

Bekannt ist es auch, als Endglieder von Kettensträngen ausgebildete Vertikalglieder zwecks Bildung von Knotenpunkten beide Schenkel eines Horizontalgliedes umfassen zu lassen (DE-AS-24 06 102). Dabei geht man so vor, daß man Vertikalglieder mit einem weiten Innenraum auf einen Kettenstrangabschnitt auffädelt und sie anschließend im Bereich des zum jeweiligen Knotenpunkt gehörenden Horizontalgliedes zusammendrückt. Diese Art des Vorgehens vermag deshalb nicht zu befriedigen, weil die die beiden Schenkel eines Horizontalgliedes umfassenden Vertikalglieder nur auf "unvernetzte" Kettenstrangabschnitte auffädelbar sind, d.h. ihre Anbringung muß vor der Endmontage der Kette bzw. des Laufnetzes der Kette erfolgen. Andererseits ist das Zusammendrücken der bereits vor der Montage geschweißten Vertikalglieder nicht unproblematisch. Dies gilt insbesondere in den Fällen, in denen man Vertikalglieder verwendet, die ursprünglich eine kreisrunde auf das Kettenkreuz der einzufädelnden Kette abgestimmte Innenkontur hatten. Derartige Kettenglieder lassen sich vor dem Zusammendrücken nicht ohne weiteres in einer bestimmten Lage justieren und es ist nicht auszuschließen, daß beim Zusammendrücken die Schweißstelle des Vertikalgliedes in einer Weise beansprucht wird, die zum vorzeitigen Bruch des Vertikalgliedes führt.

Bei geschweißten ovalen Kettengliedern befindet sich die Schweißstelle üblicherweise im Bereich eines der Längsschenkel der Kettenglieder. Es sind jedoch auch Ketten bekannt, bei denen die Kettenglieder nicht im Bereich ihrer Längsschenkel, sondern im Bereich ihrer jeweiligen Gliedrundungen eine Schweißstelle aufweisen (US-PS-23 40 171). Reifenketten, bei denen im Bereich ihrer Gliedrundungen geschweißte Kettenglieder als Stützglieder oder Knotenpunktsglieder Verwendung finden, sind jedoch nicht bekannt geworden.

Der Erfindung liegt die Aufgabe zugrunde, bei einer Reifenkette der in Betracht gezogenen Art die jeweils zwei Schenkel eines Horizontalgliedes umgreifenden Vertikalglieder so auszubilden, daß sie einerseits die Herstellung des Laufnetzes erleichtern und daß sie andererseits zur Erhöhung der Verschleißfestigkeit der Reifenkette beitragen. Diese Aufgabe wird erfindungsgemäß dadurch gelöst, daß die jeweils zwei Schenkel eines Horizontalgliedes umfassenden Vertikalglieder im Bereich jeweils einer ihrer Gliedrundungen eine Schweißstelle aufweisen und auf mindestens einem ihrer ungeschweißten Schenkel eine Auflage aus einem gegenüber den für die Herstellung der Kettenglieder verwendeten Material verschleißfesterem Material aufgetragen ist.

Die erfindungsgemäße Reifenkette bietet den Vorteil, daß sie einfach herstellbar ist und daß durch die Verwendung von im Bereich der Gliedrundung zusammengeschweißten Vertikalgliedern die Voraussetzungen dafür geschaffen wurden, daß man die Längsschenkel der Vertikalglieder mit Auflagen versehen kann, ohne daß hierdurch die Bruchgefahr der jeweiligen Horizontalglieder erhöht wird. Während es weder bei bisher bekannten offenen Stützgliedern noch bei zusammendrückbaren Knotenpunktsgliedern möglich war, die die Stützglieder bzw. Knotenpunktsglieder bildenden Vertikalglieder mit Auflagen zu versehen, ermöglicht die Erfindung auf einfache Weise die geschilderte vorteilhafte Ausgestaltung der entsprechenden Glieder und die Erhöhung der Verschleißfestigkeit der im Sinne der Erfindung ausgebildeten Reifenkette.

Gegenstand der Erfindung ist außerdem ein Verfahren zur Herstellung von Reifenketten der in Betracht gezogenen Art, das dadurch gekennzeichnet ist, daß die jeweils zwei Schenkel eines Horizontalgliedes umfassenden Vertikalglieder vor dem Zusammenschweißen ihrer einen Einführspalt für die Schenkel des jeweiligen Horizontalgliedes begrenzenden Enden an der Außenseite mindestens ein es ihrer Schenkel mit einer Auflage aus verschleißfestem Material versehen werden.

Die Erfindung wird im folgenden anhand mehrerer in der beigefügten Zeichnung dargestellter Ausführungsbeispiele näher erläutert. Es zeigen:

Fig. 1 die Draufsicht auf einen mit Stützgliedern versehenen Kettenstrangabschnitt einer Reifenkette,

Fig. 2 im vergrößerten Maßstab das Anbringen eines Stützgliedes auf einem Horizontalglied,

Fig. 3 ein auf einem Horizontalglied eines Kettenstrangabschnittes aufgebrachtes Stützglied,

Fig. 4 ein mit einer von zwei Höckern gebildeten Auflage versehenes Stützglied,

Fig. 5 einen Schnitt durch ein mit einer Auflage versehenes Vertikalglied,

Fig. 6 ebenfalls einen Schnitt durch ein mit einer Auflage versehenes Vertikalglied,

Fig. 7 einen Schnitt durch ein weiteres mit einer Auflage versehenes Vertikalglied,

Fig. 8 die Draufsicht auf einen ersten Knotenpunkt einer Reifenkette,

Fig. 9 die Draufsicht auf einen Knotenpunkt einer Reifenkette abgewandelter Bauart,

Fig. 10 im vergrößerten Maßstab das Einführen der Schenkel eines Horizontalgliedes in den Innenraum eines zu einem Knotenpunkt gehörenden Vertikalgliedes und

Fig. 11 die Seitenansicht der in Fig. 9 dargestellten Teile nach dem Schließen und Verschweißen der Enden der Schenkel des Vertikalgliedes.

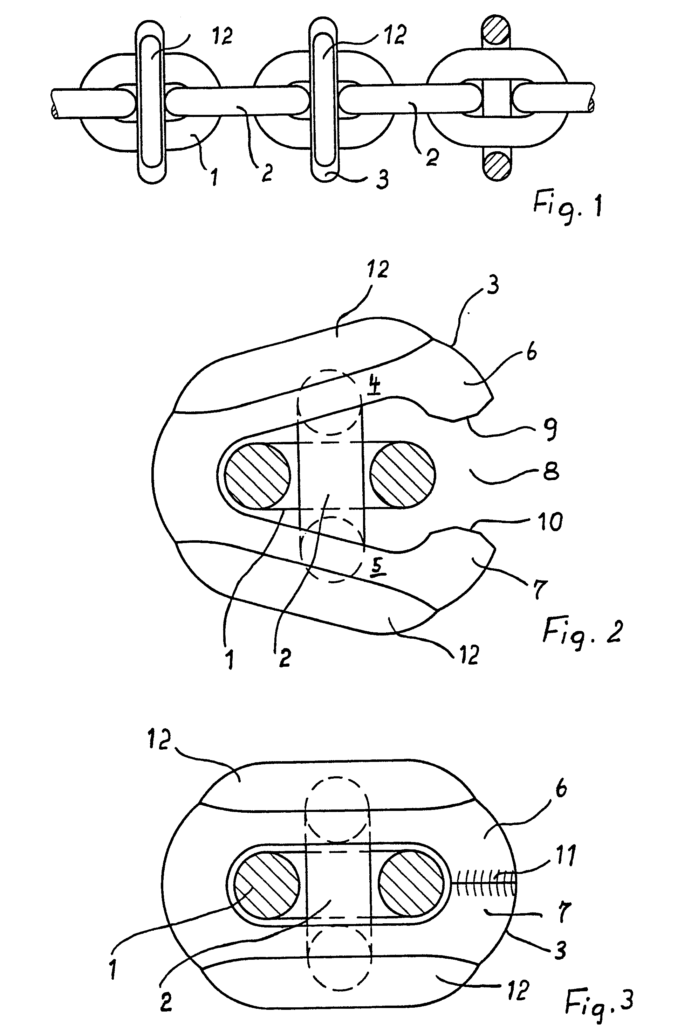

In Fig. 1 ist ein Kettenstrangabschnitt des Laufnetzes einer Reifenkette dargestellt, der aus Horizontalgliedern 1 und Vertikalgliedern 2 besteht. Die Horizontalglieder 1 tragen als Stützglieder ausgebildete Vertikalglieder 3, die sie mit leichtem Spiel umschließen.

In Fig. 2 ist die Montage der als Stützglieder ausgebildeten Vertikalglieder 3 angedeutet. Man erkennt, daß die Schenkel 4 und 5 des Vertikalgliedes 3 zangenartig geöffnet sind und ihre Enden 6 und 7 einen Einführspalt 8 begrenzen, der es gestattet, das Vertikalglied 3 zwischen zwei aufeinanderfolgenden Vertikalgliedern 2 über ein Horizontalglied 1 zu führen. Anschließend werden die Enden 6 und 7 zusammengedrückt, bis ihre Stirnfächen 9 und 10 zur Anlage kommen. Sobald dies der Fall ist, werden die Enden 6 und 7 durch eine elektrische Widerstandsstumpfschweißung miteinander verbunden. Danach erfolgt eine Entgratung der Schweißstelle 11. Zum Zusammendrücken der aus schweißtechnischen Gründen abgeschrägten Enden 6 und 7 werden zweckmäßigerweise die nicht dargestellten Schweißwerkzeuge verwendet.

Wie man den Figuren zu entnehmen vermag, sind beide Schenkel 4 und 5 an ihrer Außenseite mit Auflagen 12 aus hochverschleißfestem Material versehen. Die Auflagen 12 befinden sich dabei in einem Bereich der als Stützglieder ausgebildeten Vertikalglieder 3, der eine Beeinflussung der Verhältnisse an der Schweißstelle ausschließt.

Beim Betrachten der Fig. 2 wird deutlich, daß die Anbringung der Vertikalglieder 3 auf den Horizontalgliedern 1 außerordentlich einfach ist und beim Schließen des Einführspaltes 8 eine ungünstige Belastung der Schenkel 4 und 5 nicht stattfindet. Als vorteilhaft erweist sich zudem der Umstand, daß die Schweißstelle 11 sich in einem Bereich befindet, in dem der Verschleißangriff vergleichsweise gering ist. Der Querschnitt des Stützgliedes im Bereich der Schweißstelle bleibt mit anderen Worten lange erhalten. Durch die Anbringung der Auflagen 12 wird die äußere Breite der als Stützglieder ausgebildeten Vertikalglieder 3 größer als die äußere Breite der Vertikalglieder 2. Die hieraus resultierende erhöhte Belastung der Vertikalglieder 3 führt infolge der geschlossenen Bauweise dieser Vertikalglieder jedoch nicht zu einem unerwünscht frühzeitigen Bruch der Stützglieder.

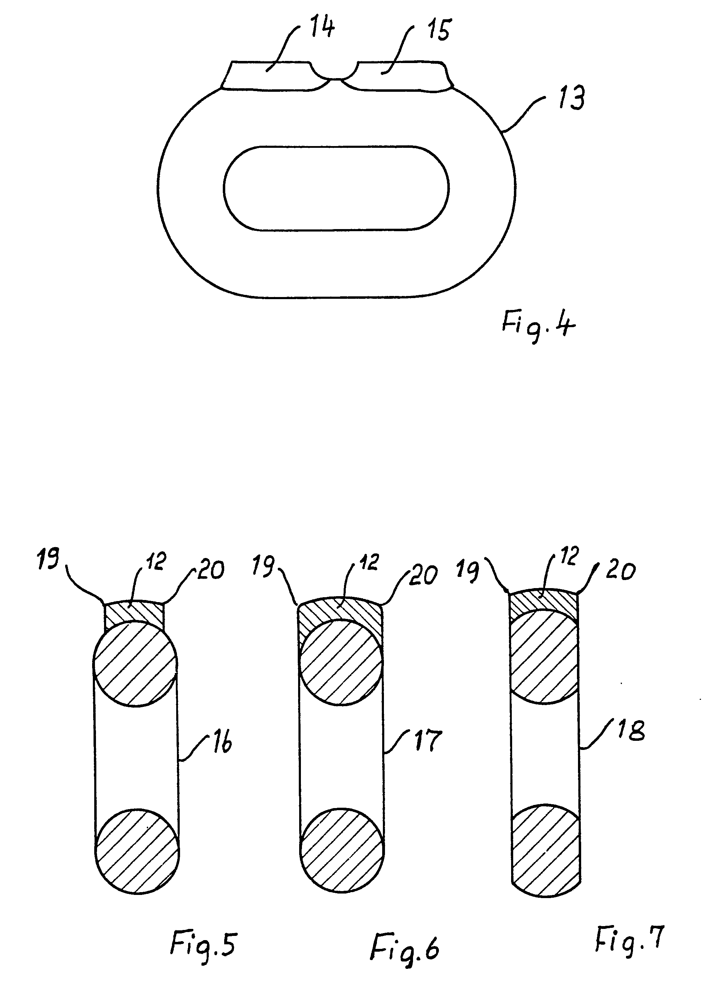

In Fig. 4 ist ein als Stützglied ausgebildetes Vertikalglied 13 dargestellt, bei dem die Auflage von zwei Höckern 14 und 15 gebildet wird. Wie im zuerst beschriebenen Fall die Auflagen 12 so reichen auch hier die außen liegenden Enden der Höcker 14, 15 bis in den Bereich der Gliedrundungen. Hierdurch erhält man nicht nur einen Verschleißschutz für die Gliedrundungen, sondern es werden auch die Kräfteverhältnisse im Glied vorteilhaft beeinflußt.

Die Figuren 5 bis 7 zeigen Schnitte durch als Stütz- oder Knotenpunktglieder verwendbare Vertikalglieder 16, 17, 18. Allen diesen Gliedern ist gemein, daß sie mit Greifkanten 19, 20 versehen sind.

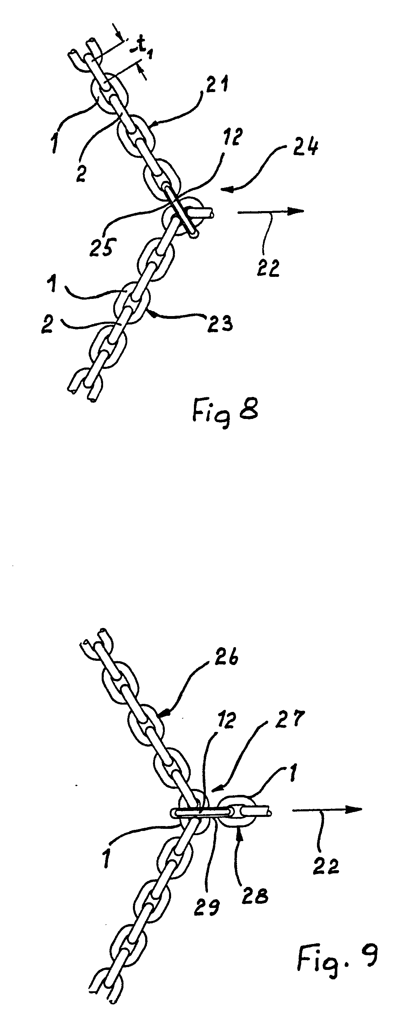

In Fig. 8 ist 21 ein erster schräg zur durch einen Pfeil 22 angedeuteten Laufrichtung eines mit einer Reifenkette bestückten Reifens verlaufender Kettenstrangabschnitt aus Horizontalgliedern 1 und Vertikalgliedern 2. Die Horizontalglieder 1 und die Vertikalglieder 2 haben im dargestellten bevorzugten Fall eine Teilung von $t_1$ von etwa $3d_1$, wobei $d_1$ die größte Erstreckung des Querschnittes der Kettenglieder, in deren Rundung, in Längsrichtung des jeweiligen Kettenstrangabschnittes betrachtet, ist. 23 ist ein weiterer Kettenstrangabschnitt, der im Bereich eines Knotenpunktes 24 durchgehend ausgebildet ist und ebenfalls aus Horizontalgliedern 1 und Vertikalgliedern 2 besteht.

Das Endglied des Kettenstrangabschnittes 21 wird von einem Vertikalglied 25 größerer Teilung gebildet, und zwar ist die Teilung $t_2$ dieses Vertikalgliedes 25 vorzugsweise gleich $4,65d_1$ . Die größte Erstreckung $d_2$ des Querschnittes des Vertikalgliedes 25 im Bereich seiner Gliedrundung kann gleich oder größer als $d_1$ sein. Bei Rundstahlgliedern sind $d_1$ und $d_2$ die Glieddicken.

Bei dem in Fig. 9 dargestellten Ausführungsbeispiel ist 26 ein Kettenstrangabschnitt, der sich quer über die gesamte Lauffläche eines mit der Reifenkette zu bestückenden Reifens erstreckt, d.h. der im Bereich des Knotenpunktes 27 durchgehend ausgebildet ist. 28 ist ein Kettenstrangabschnitt, der ein Spurstück bildet. Das als Endglied ausgebildete Vertikalglied 29 dieses Kettenstrangabschnittes umfaßt auch in diesem Fall die Gliedrundung eines Horizontalgliedes 1 des Kettenstrangabschnittes 28 sowie beide Schenkel eines Horizontalgliedes 1 des Kettenstrangabschnittes 26.

Vergleicht man die beiden Konstruktionen gemäß Fig. 8 und 9, so läßt sich feststellen, daß die Konstruktion gemäß Fig. 8 über die größere Kipp- bzw. Umstülpfestigkeit ihres Knotenpunktes verfügt.

Die Vertikalglieder 25 und 29 sind wie die als Stützglieder ausgebildeten Vertikalglieder 3 des Kettenstrangabschnittes gemäß Fig. 1 bis 3 mit Auflagen 12 versehen.

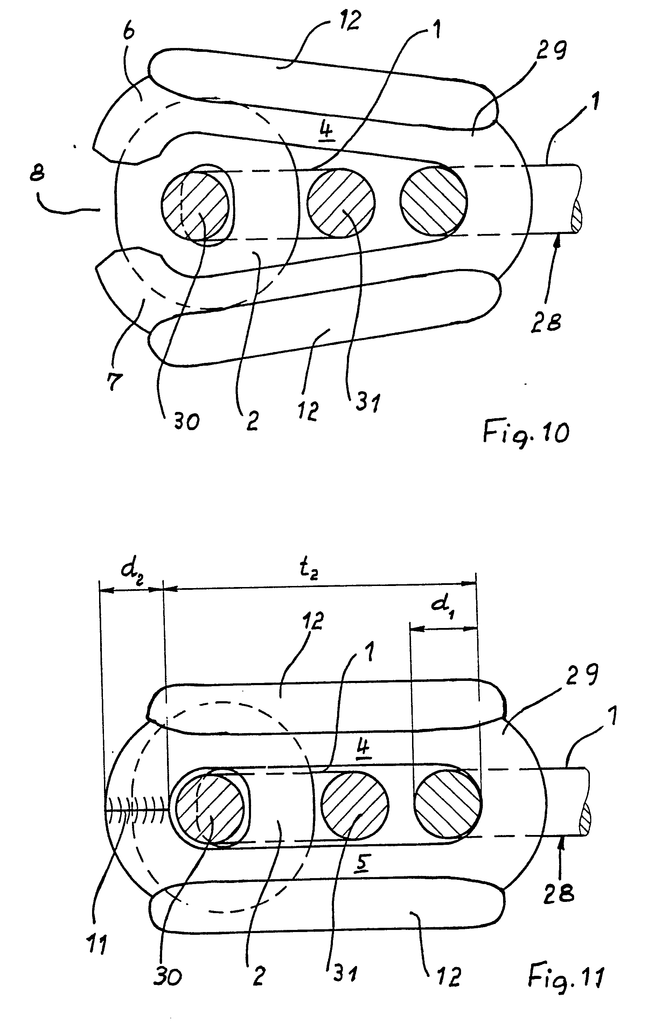

In den Fig. 10 und 11 ist die Herstellung von Knotenpunkten der in Fig. 9 dargestellten Art angedeutet. Man erkennt, daß die Schenkel 4 und 5 des in die Gliedrundung des Horizontalgliedes 1 des Kettenstrangabschnittes 28 eingehängten Vertikalgliedes 29 zangenförmig auseinandergespreizt sind und ihre Enden 6 und 7 wiederum einen Einführspalt 8 für ein Schenkel 30 und 31 aufweisendes Horizontalglied 1 des Kettenstrangabschnittes 26 bilden.

Sobald der Einführspalt 8 geschlossen ist, wird das Vertikalglied 29 im Bereich der Schweißstelle 11 durch eine Elektrowiderstandsstumpfschweißung geschlossen.

Die Lage der Schweißstelle 11 ermöglicht auch hier eine einfache Entgratung des Schweißwulstes. Eventuell noch an der Schweißstelle verbleibende Gratreste liegen zudem in einem Bereich, der mit der Reifenlauffläche nicht in Berührung kommt. Es ist vorteilhaft, sämtliche Glieder aus Rundstahl herzustellen. Dies schließt jedoch die Anwendung von Profilstahl zur Herstellung der Glieder, und zwar insbesondere zur Herstellung der die Auflagen 12 tragenden Vertikalglieder nicht aus.

Die Auflagen werden vorzugsweise durch Pulverbeschichtung oder durch Auftragsschweißung vor dem Montieren der Vertikalglieder auf deren Schenkel aufgetragen.

**Patentansprüche**

1. Reifenkette, insbesondere Gleitschutzkette mit aus ovalen Horizontal- und Vertikalgliedern bestehenden Kettenstrangabschnitten, bei der die geraden Schenkel mindestens eines Teils der Horizontalglieder der Kettenstrangabschitte zwischen den Gliedrundungen jeweils zweier in sie eingehängter Vertikalglieder von jeweils einem ovalen Vertikalglied umfaßt werden, dadurch gekennzeichnet, daß die jeweils zwei Schenkel eines Horizontalgliedes (1) umfassenden Vertikalglieder (3; 13; 16; 17; 18; 25; 29) im Bereich jeweils einer ihrer Gliedrundungen eine Schweißstelle (11) aufweisen und auf mindestens einen ihrer ungeschweißten Schenkel (4, 5) eine Auflage (12; 14; 15) aus einem gegenüber dem für die Herstellung der Kettenglieder (1; 2; 3; 13; 16; 17; 18; 25; 29) verwendeten Material verschleißfesteren Material aufgetragen ist.

2. Reifenkette nach Anspruch 1, dadurch gekennzeichnet, daß die Auflage (12) mindestens eine Greifkante (19, 20) bildet.

3. Reifenkette nach Anspruch 1, dadurch gekennzeichnet, daß die Auflage von Höckern (14, 15) gebildet wird.

4. Reifenkette nach einem der Ansprüche 1, 2 oder 3, dadurch gekennzeichnet, daß die mit einer Auflage (12; 15; 16) versehenen Vertikalglieder (3; 13) Stützglieder bilden.

5. Reifenkette nach Anspruch 4, dadurch gekennzeichnet, daß die Stützglieder (3; 13) einen größeren Querschnitt haben als die übrigen Kettenglieder.

6. Reifenkette nach einem der Ansprüche 1, 2 oder 3, dadurch gekennzeichnet, daß die mit einer Auflage (12) versehenen Vertikalglieder (25; 29) zusammen mit jeweils einem Horizontalglied (1) eines durchgehenden Kettenstrangabschnittes (23; 26) einen Knotenpunkt (24; 27) bildende Endglieder eines weiteren Kettenstrangabschnittes (21; 28)formen.

7. Reifenkette nach Anspruch 6, dadurch gekennzeichnet, daß die einen Knotenpunkt (24; 27) bildenden, mit einer Auflage (12) versehenen Vertikalglieder (25; 29) einen größeren Querschnitt haben als die übrigen Kettenglieder (1, 2).

8. Reifenkette nach einem der Ansprüche 1 bis 7, dadurch gekennzeichnet, daß jeweils beide Schenkel (4, 5) der ein Horizontalglied (1) umfassenden Vertikalglieder (3; 25; 29) mit einer Auflage (12) versehen sind.

9. Reifenkette nach einem der Ansprüche 1 bis 8, dadurch gekennzeichnet, daß sich die Auflagen (12; 14; 15) bis in den Bereich der Gliedrundungen der Vertikalglieder erstrecken.

10. Verfahren zum Herstellen einer Reifenkette nach einem der Ansprüche 1 bis 9, dadurch gekennzeichnet, daß die jeweils zwei Schenkel (30, 31) eines Horizontalgliedes (1) umfassenden Vertikalglieder (3; 13; 16; 17; 18; 25; 29) vor dem Zusammenschweißen ihrer einen Einführspalt (8) für die Schenkel des jeweiligen Horizontalgliedes (1) begrenzenden Enden an der Außenseite mindestens eines ihrer Schenkel (4, 5) mit einer Auflage (12) aus verschleißfestem Material versehen werden.

11. Verfahren nach Anspruch 10, dadurch gekennzeichnet, daß das verschleißfestere Material durch Auftragsschweißung auf den jeweiligen Gliedschenkel (4, 5) aufgetragen wird.

12. Verfahren nach Anspruch 10, dadurch gekennzeichnet, daß das verschleißfestere Material durch Pulverbeschichtung auf den jeweiligen Gliedschenkel aufgetragen wird.

**Claims**

1. A tyre chain, especially an anti-skid chain with chain length sections comprising oval horizontal and vertical links, in which the straight sides of at least one part of the horizontal links of the chain length sections are grasped in each case by an oval vertical link between the link curvatures of two vertical links hung in them, characterised in that the vertical links (3; 13; 16; 17; 18; 25; 29), each of which grasps two sides of a horizontal link (1), comprise a weld (11) in tne region of one, in each case, of their link curvatures, and on to at least one of their unwelded sides (4, 5) there is applied a covering (12; 14; 15) of a material more resistant to wear than the material the production of the chain links (1; 2; 3; 13; 16; 17; 18; 25; 29).

2. A tyre chain according to Claim 1, characterised in that the covering (12) forms at least one gripping edge (19, 20).

3. A tyre chain according to Claim 1, characterised in that the covering is formed by protuberances (14, 15).

4. A tyre chain according to any one of Claims 1, 2 or 3, characterised in that the vertical links (3; 13) provided with a covering (12; 15; 16) form support links.

5. A tyre chain according to Claim 4, characterised in that the support links (3; 13) have a larger cross-section than the other links.

6. A tyre chain according to any one of Claims 1, 2 or 3, characterised in that the vertical links (25; 29) provided with a covering (12), together in each case with a horizontal link (1) of a continuing chain length section (23, 26), form end links of a further chain length section (21; 28), which form a nodal point (24; 27).

7. A tyre chain according to Claim 6, characterised in that the vertical links (25; 29) provided with a covering (12), which form a nodal point (24; 27), have a larger cross-section than the other chain links (1, 2).

8. A tyre chain according to any one of Claims 1 to 7 characterised in that both sides (4, 5) of each of the vertical links (3; 25; 29) which grasp a horizontal link (1) are provided with a covering 12.

9. A tyre chain according to any one of Claims 1 to 8, characterised in that the covering (12; 14; 15) extend into the region of the link curvatures of the vertical links.

10. A method for the production of a tyre chain according to any one of claims 1 to 9, characterised in that the vertical links (3; 13; 16; 17; 18; 25; 29) each grasping around two sides (30, 31) of a horizontal link (1) are provided with a covering (12) of wear-resistant material on the outside of at least one of their sides (4, 5), before the welding together of their ends which define an entry gap (8) for the sides of the horizontal link (1) in each case.

11. A method according to Claim 10, characterised in that the more wear-resistant material is applied to the link side (4, 5) by built-up welding.

12. A method according to Claim 10, characterised in that the more wear-resistant material is applied to the link side in each case by powder coating.

## Revendications

1. Chaîne pour pneumatiques, notamment chaîne anti-dérapante, comportant des tronçons de chaîne constitués de maillons ovales horizontaux et verticaux, où les côtés droits d'au moins une partie des maillons horizontaux des tronçons de chaîne situés entres les parties arrondies de deux maillons verticaux accrochés dans les maillons horizontaux, sont entourés par un maillon vertical ovale, caractérisée en ce que les maillons verticaux (3; 13; 16; 17; 18; 25; 29) entourant deux côtés d'un maillon horizontal (1) présentent un point de soudure (11) dans la zone de l'une de leurs parties arrondies, et en ce qu'un revêtement (12; 14; 15) fait dans un matériau plus résistant à l'usure que le matériau utilisé pour la fabrication des maillons de la chaîne (1; 2; 3; 13; 16; 17; 18; 25; 29), est appliqué sur au moins l'un de ces côtés (4, 5) non soudés.

2. Chaîne pour pneumatiques selon la revendication 1, caractérisée en ce que le revêtement (12) forme au moins une arête de prise (19, 20).

3. Chaîne pour pneumatiques selon la revendication 1, caractérisée en ce que le revêtement est formé par des bossages (14, 15).

4. Chaîne pour pneumatiques selon l'une des revendications 1, 2 ou 3, caractérisée en ce que les maillons verticaux (3; 13) pourvus d'un revêtement (12; 15; 16) forment des maillons d'appui.

5. Chaîne pour pneumatiques selon la revendication 4, caractérisée en ce que les maillons d'appui (3; 13) ont une section transversale supérieure à celle des autres maillons de la chaîne.

6. Chaîne pour pneumatiques selon l'une des revendications 1, 2 ou 3, caractérisée en ce que chacun des maillons verticaux (25; 29) pourvu d'un revêtement (12) forme, avec un maillon horizontal (1) d'un tronçon de chaîne (23; 26) continu, des maillons terminaux constituant un noeud de jonction (24; 27) d'un autre tronçon de chaîne (21; 28).

7. Chaîne pour pneumatiques selon la revendication 6, caractérisée en ce que les maillons verticaux (25; 29) pourvus d'un revêtement (12) et formant un point de jonction (24; 27), ont une section transversale supérieure à celle des autres maillons de la chaîne (1, 2).

8. Chaîne pour pneumatiques selon l'une des revendications 1 à 7, caractérisée en ce que les deux côtés (4, 5) des maillons verticaux (3; 25; 29) entourant un maillon horizontal (1) sont pourvus d'un revêtement (12).

9. Chaîne pour pneumatiques selon l'une des revendications 1 à 8, caractérisée en ce que les revêtements (12; 14; 15) s'étendent jusque dans la zone des parties arrondies des maillons verticaux.

10. Procédé de fabrication d'une chaîne pour pneumatiques selon l'une des revendications 1 à 9, caractérisé en ce que chacun des maillons verticaux (3; 13; 16; 17; 18; 25; 29) entourant deux côtés (30, 31) d'un maillon horizontal (1), reçoit sur la face extérieure d'au moins l'un de leurs côtés (4, 5) un revêtement (12) fait dans un matériau résistant à l'usure, avant l'assemblage par soudure de leurs extrémités délimitant une fente (8) d'introduction des côtés du maillon horizontal (1) concerné.

11. Procédé selon la revendication 10, caractérisé en ce que le matériau résistant à l'usure est appliqué par rechargement par soudure sur les côtés (4, 5) du maillon considéré.

12. Procédé selon la revendication 10, caractérisé en ce que le matériau résistant à l'usure est appliqué par dépôt d'une poudre sur le côté du maillon considéré.

Fig. 1

Fig. 2

Fig. 3

14    15

13

Fig.4

19    12    20         19    12    20         19    12    20

16              17              18

Fig.5              Fig.6              Fig.7

Fig 8

Fig. 9

0 093 688

Fig. 10

Fig. 11